# FASCICULE DE BREVET EUROPEEN

(11) **EP 2 540 433 B1**
(45) Date de publication et mention de la délivrance du brevet: **17.08.2016**
(21) Numéro de dépôt: 12174603.6
(22) Date de dépôt: 02.07.2012
(51) Int. Cl.: B23K 26/34, B23P 6/00, B23P 15/24, B29C 33/56, C03B 9/48, C03B 11/08, C03B 40/00, C23C 4/08

(54) **Procédé de rechargement d'un moule de verrerie par rechargement laser de poudres**
Auftragsschweißverfahren einer Glasform unter Verwendung von Pulver-Laser-Auftragschweissen
Method of refilling a mold for glas using powder laser buildup

(30) Priorité: 30.06.2011 FR 1155889
(43) Date de publication de la demande: 02.01.2013
(73) Titulaire: Etablissements Chpolansky, 91460 Marcoussis (FR)
(72) Inventeur: Van Liden, Serge, 77550 MOISSY CRAMAYEL (FR)
(74) Mandataire: Regimbeau

(56) Documents cités:
- EP-A2- 0 221 752
- WO-A1-2009/090622
- CH-A5- 658 045
- JP-A- 1 091 987
- US-A- 4 471 034
- US-A1- 2004 086 635

## Description

### DOMAINE DE L'INVENTION

L'invention concerne de manière générale les pièces de fonderie dans le domaine de la verrerie, notamment les moules en fonte, en bronze (et autre alliages comprenant du cuivre et de l'étain) ou en acier utilisés pour confectionner des objets en verre tels que des bouteilles.

L'invention concerne aussi les traitements de rechargement en surface de tels moules en vue de leur finition ou de leur réparation, comprenant le dépôt d'un matériau, par exemple un métal fondu, sur la surface d'un moule, notamment au niveau des arêtes et de leur surface; et plus particulièrement un procédé de rechargement d'un moule de verrerie conformément au preambule de la revendication 1 (voir, par exemple CH 658 045 A).

### CONTEXTE DE L'INVENTION

Les moules en fonte, en bronze (et autre alliages comprenant du cuivre et de l'étain), ou en acier (notamment des aciers de type fer-carbone, aciers inoxydables, aciers réfractaires) qui sont généralement utilisés dans la confection d'objets en verre, ont tendance à s'user rapidement, en particulier dans des zones comme le plan de joint J (ou couture), le fond F, la bague ou encore le col C du moule. En effet, lors de l'étape de moulage de la paraison, en l'occurrence du verre, les moules subissent un phénomène d'abrasion et/ou de corrosion, en raison de la présence de silice dans le verre. Par ailleurs, lors d'un cycle de moulage, un moule peut subir de fortes contraintes thermiques, en passant dans un temps très court de 400°C à 800°C.

Afin de ne pas avoir à changer l'ensemble du moule, on a donc proposé des techniques de rechargement, au cours desquelles on fait fusionner une couche d'alliage métallique sur la surface d'un moule, notamment au niveau des arêtes. Le moule ainsi obtenu est alors usiné après refroidissement afin d'obtenir la géométrie souhaitée.

Le rechargement des moules est réalisé au chalumeau ou par Plasma Transféré d'Arc (PTA).

Le rechargement au chalumeau consiste à braser une poudre ou un fil métallique sur les surfaces de moulage du moule. Pour cela, on préchauffe le moule à une température de l'ordre de 350°C à 650°C, et on fait fondre au chalumeau le métal de rechargement ainsi qu'une couche superficielle du moule au chalumeau afin d'assurer ainsi la liaison entre les deux matériaux.

Cependant, cette technique de rechargement est réalisée manuellement. Elle présente donc plusieurs inconvénients, parmi lesquels la pénibilité du travail pour l'opérateur (qui doit travailler une vingtaine de minutes dans un environnement à proximité d'une température approchant les 650°C afin de garantir le brasage des métaux), la nécessité d'un savoir-faire de l'opérateur et une grande variabilité des résultats. On remarque en effet que le taux de succès n'excède pas 90% des pièces rechargées, et peut descendre jusqu'à 25%, en raison de décollements des métaux de rechargement.

Par ailleurs, afin d'obtenir une géométrie proche de la géométrie initiale du moule, on dépose généralement une quantité très importante de métal de rechargement (de l'ordre du double de la quantité nécessaire, ou davantage), puis on usine la surface obtenue. Ce procédé est donc coûteux en matières premières, et l'opération d'usinage est longue et fastidieuse.

Enfin, la zone du moule ayant été surchauffée lors du rechargement présente des propriétés thermiques et mécaniques différentes du reste de la fonte constituant le moule. En effet, pour un moule en fonte, dans cette zone, dite « Zone Affectée Thermiquement » (ZAT), la fonte devient « blanche », c'est-à-dire très dure et cassante, fragile et difficile à usiner. Le moule devient donc plus fragile dans cette zone et est donc susceptible de se casser plus facilement en cas de chocs mécaniques ou thermiques. Or dans le cas d'un rechargement au chalumeau, la ZAT est relativement grande, et présente en règle générale des dimensions (surface et profondeur) de l'ordre de 3 à 4 mm.

Afin de limiter l'étendue de la ZAT sur le moule fini, on a proposé de procéder à un recuit de recristallisation du moule pendant plusieurs heures. Cette étape est cependant rarement mise en oeuvre car trop longue et trop contraignante.

Le rechargement Plasma Transféré d'Arc (PTA) quant à lui suit un principe similaire au rechargement au chalumeau, la source de chaleur étant remplacée par une colonne plasma.

L'avantage de ce procédé est que le plasma présente une température beaucoup plus importante que la flamme d'un chalumeau (de 15000 à 20000°C), ce qui permet de chauffer plus rapidement le matériau de rechargement à faire fondre et la surface de la pièce sur lequel on le dépose, restreignant ainsi les dimensions de la ZAT à environ 2 mm.

Par ailleurs, le taux de succès de ce procédé est bien meilleur que dans le cas d'un rechargement au chalumeau (de l'ordre de 95%), puisqu'il peut être automatisé.

Il présente néanmoins certains inconvénients. En particulier, il est très difficile de l'appliquer à des fontes lamellaires (fontes dans lesquelles le carbone est sous forme de graphite lamellaire) car l'application du procédé entraîne un risque de dégazage du graphite, ce qui peut provoquer des défauts (par exemple des trous) dans le dépôt. On rappelle en effet que la proportion de carbone dans une fonte donnée n'est pas fixe, mais plutôt un ordre de grandeur pouvant varier à l'intérieur d'une fourchette donnée. Or cette proportion peut avoir des conséquences importantes sur le résultat obtenu dans la ZAT. En outre, elle reste de dimensions importantes dans le cadre du procédé PTA.

Par ailleurs, la quantité de métal de rechargement soudée sur le moule reste importante par rapport à la quantité nécessaire pour obtenir la géométrie finale souhaitée, augmentant ainsi le coût global du rechargement.

Enfin, ce procédé nécessite de préchauffer le moule à une température de l'ordre de 350°C, ce qui impose de refroidir la pièce par paliers après le rechargement si l'on souhaite préserver les propriétés mécaniques et thermiques de la fonte, ce qui peut durer plusieurs heures.

Le document WO 2009/090622 décrit un procédé de réparation d'un moule de verrerie abîmé, dans lequel s'est formée par exemple une fissure, au cours duquel on usine l'intégralité de la cavité du moule afin de retirer une couche métallique du moule. Le moule est ensuite chauffé à une température de l'ordre de 450°C dans le but d'ouvrir la fissure et de retirer une couche surfacique de métal autour de la fissure, avant de remplir la fissure avec du métal fondu et de laisser le moule refroidir à température ambiante. Le moule est ensuite recuit à une température de l'ordre de 600°C, puis une couche de rechargement de métal fondue est déposée sur l'intégralité de sa cavité sur une épaisseur plus importante que celle de la couche métallique qui a été retirée lors de l'étape d'usinage, par exemple par dépôt d'une poudre métallique sur la surface du moule qui est refondue et consolidée au moyen d'un rayon laser. Enfin, la cavité du moule est usinée afin de retirer l'excédent de matériau.

Ce procédé permet donc de réparer des moules de verrerie et de prolonger leur durée de vie. Néanmoins, il nécessite de nombreuses étapes, dont en particulier des étapes d'usinage de l'intégralité de sa cavité (à deux reprises), de préchauffage, de recuit, etc. qui sont longues, fastidieuses et ont un coût en matières premières et en énergie important. De plus, une grande quantité de matériau de rechargement est nécessaire afin de pouvoir usiner la surface du moule après dépôt du matériau de rechargement, et il est difficilement envisageable du point de vue industriel de recharger l'intégralité de la surface d'un moule de verrerie au moyen d'un laser.

Le document WO 01/28942 quant à lui propose de recharger la surface des moules de verrerie au cours duquel la cavité du moule est recouverte par une couche de protection de manière à rendre la surface interne du moule plus résistante aux différents cycles de moulage. Pour cela, ce document suggère le dépôt d'une poudre d'alliage métallique ayant une composition adaptée dans la cavité, par exemple par projection thermique, puis la fusion de la poudre en faisant chauffer le moule sous vide à une température élevée. Ce procédé présente l'avantage d'allonger la durée de vie du moule. Toutefois, il présente un coût élevé, notamment en termes de matériau d'apport, et peut être difficile à mettre en oeuvre selon la technique de fonte de la poudre utilisée.

Dans le cas où le moule serait quand même abîmé malgré sa couche de protection, ce même document propose de réparer localement le moule en faisant fondre une rustine en alliage métallique (de la même composition adaptée) sur la zone endommagée. Néanmoins, selon les moyens utilisés pour faire fondre la rustine, celle-ci risque de se décoller, ou du moins fragiliser localement le moule. Par ailleurs, sa qualité métallurgique est moindre en comparaison avec celle du reste du moule.

Le document CH 658 045 décrit un procédé de fabrication d'un moule de verrerie, au cours duquel la surface du moule est sablée avec du corindon, puis on applique un revêtement comprenant un alliage déterminé sur le moule par projection thermique à l'aide d'un plasma transféré d'arc. On applique ensuite une couche supplémentaire sur les arêtes, avec le même alliage, puis on usine les arêtes du moule.

Le document JP 01091987 quant à lui décrit un procédé de soudage d'une couche de métal dans une encoche par application d'un laser sur l'encoche et projection du métal sous forme de poudre à l'aide d'un gaz inerte.

Enfin, le document US 2004/0086635 décrit un procédé de réparation d'une aube de stator dans un moteur à turbine, au cours duquel on applique une couche de revêtement à l'aide d'un laser.

Ainsi, les techniques actuelles sont toujours très imparfaites, et n'apportent pas pleine satisfaction tant au niveau de leur efficacité que de leur rapidité.

### RESUME DE L'INVENTION

En conséquence, un objectif de la présente invention est de proposer un procédé de rechargement de moules de verrerie en fonte permettant de recharger et/ou de réparer des moules de verrerie, qui soit rapide à mettre en oeuvre, moins sensible à la composition de la fonte utilisée, dont le taux de succès soit similaire voire meilleur que dans le cadre d'un rechargement par PTA, tout en limitant la quantité de métal de rechargement nécessaire.

A cet égard, l'invention propose un procédé de rechargement d'un moule de verrerie en fonte tel que defini dans la revendication 1, avec les étapes suivants:

D'autres caractéristiques optionnelles et non limitatives du procédé de rechargement sont les suivantes :
* les étapes de dépôt et de soudage du matériau de rechargement sont mises en oeuvre sans préchauffage du moule,
* le matériau de rechargement se présente sous forme de poudre,
* le matériau de rechargement est projeté au moyen d'une buse sur le moule,
* le matériau de rechargement est projeté sur la surface plane, en aval de la zone de focalisation du faisceau du laser,
* la zone de focalisation est disposée à une dizaine de millimètres,
* on effectue un ou deux passages du faisceau du laser sur la surface plane du moule à recharger selon une vitesse de balayage contrôlée,
la vitesse de balayage est comprise entre 600 mm/min et 2000 mm/min, et
* le procédé comprend une étape ultérieure d'usinage de la couche de protection.

### BREVE DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- Les figures 1 a et 1 b représentent schématiquement deux modes de réalisation d'un procédé de rechargement.
- La figure 2 représente schématiquement un laser pouvant être utilisé dans le procédé selon l'invention.
- La figure 3 représente un exemple de résultat obtenu selon une forme de réalisation d'un procédé selon l'invention.
- La figure 4a représente schématiquement un exemple de moule de verrerie pouvant être rechargé selon un procédé de rechargement conforme à l'invention.
- La figure 4b représente un exemple d'un moule de verrerie, dont une arête a été usinée de manière à former un chanfrein, le moule étant vu en coupe selon l'axe X-X de la figure 3a.
- La figure 4c est une vue à échelle agrandie d'un premier exemple de mise en oeuvre du procédé appliqué au rechargement d'un chanfrein d'un moule, le moule étant vu en coupe selon l'axe X-X de la figure 4a.
- La figure 4d est une vue à échelle agrandie d'un deuxième exemple de mise en oeuvre du procédé appliqué au rechargement d'un chanfrein d'un moule, le moule étant vu en coupe selon l'axe X-X de la figure 4a.
- Les figures 5a à 5f représentent un exemple de succession d'étapes pour le rechargement du moule au niveau du chanfrein.
- La figure 6 illustre une vue en coupe du moule de verrerie de la figure 4a selon l'axe Y-Y.
- La figure 7 est une vue en coupe d'un exemple de positionnement du laser muni d'une buse coaxiale par rapport à la surface d'un moule de verrerie devant être rechargée.

### DESCRIPTION DETAILLEE DE L'INVENTION

Nous allons à présent décrire un procédé de rechargement de moules de verrerie en fonte.

Le procédé de rechargement permet de renforcer localement le moule de verrerie, en particulier au niveau des zones du moule susceptibles d'être abîmées au cours de leur utilisation, que ce soit par fatigue du métal ou en raison des fortes températures subies. Il s'agit principalement des arêtes du moule, c'est-à-dire du col C, du plan de joint J et du fond F du moule 1. Il peut être adapté notamment pour recharger le moule aux différents cycles de moulage (et consiste alors en une étape de finition du moule), ou pour le réparer localement.

Dans ce qui suit, nous décriront plus particulièrement le procédé en tant qu'étape de finition d'un moule de verrerie, permettant de renforcer localement le moule. Le moule de verrerie traité par le procédé est donc généralement un moule neuf ou du moins pas endommagé, que l'on va recharger conformément aux étapes de l'invention afin de pouvoir le renforcer et le protéger des différents chocs thermiques et mécaniques qu'il va subir au cours de son utilisation. Ceci n'est cependant pas limitatif, étant donné que le procédé peut être appliqué mutatis mutandis à la réparation d'un moule de verrerie abîmé, en appliquant les différentes étapes aux zones localement abîmées.

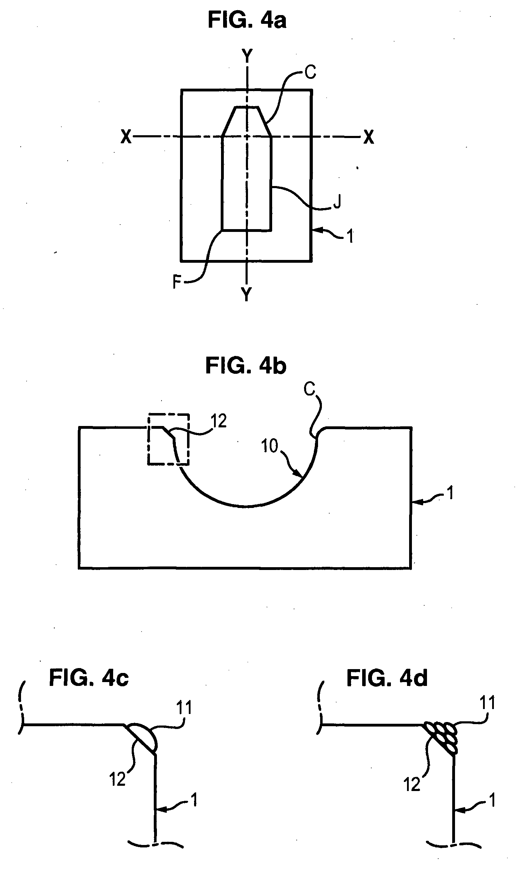

Les moules 1 sont des moules conventionnels dans le domaine de la verrerie. Par exemple il peut s'agir de moules constitués de fonte lamellaire ou sphéroïdale, et la fonte peut typiquement comprendre un pourcentage de carbone compris de préférence entre 3,3% et 3,6%, et dans tous les cas inférieur à 4,55%. Un exemple d'un tel moule de verrerie est représenté en figure 4a.

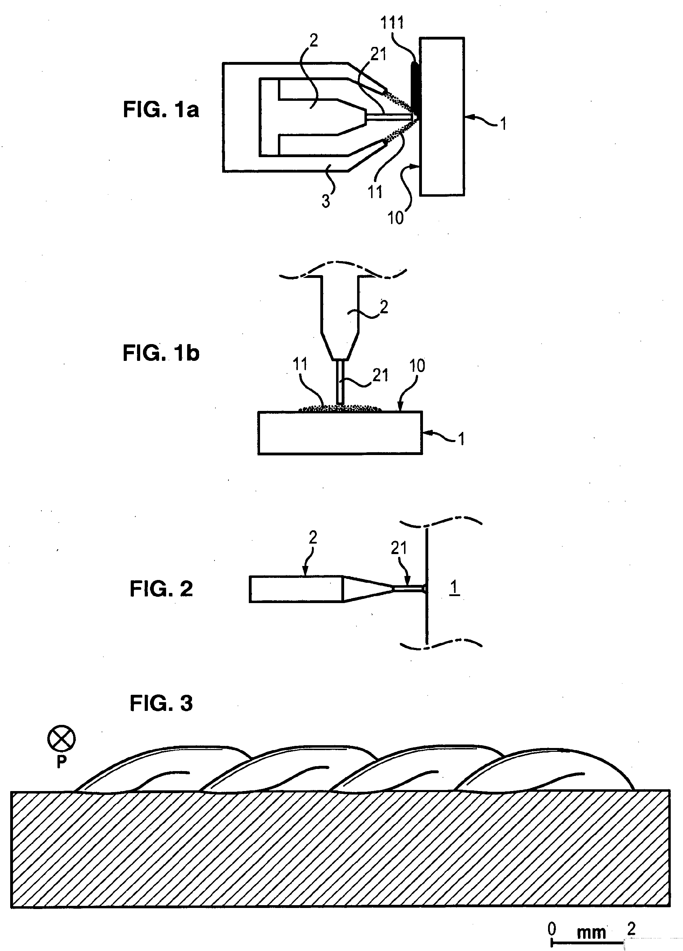

En référence à la figure 1a, on usine tout d'abord les arêtes destinées à être renforcées de manière à former une surface plane 12. Par exemple, dans le cas du plan de joint J, on réalise un méplat 12 le long du plan de joint, tandis que dans le cas du col C ou du fond F, on réalise de préférence un chanfrein 12.

On peut alors déposer et faire fondre une quantité de matériau de rechargement 11 sur la surface plane 12 de l'arête ainsi usinée.

Le procédé selon l'invention est réalisé de préférence à froid sur le moule 1, notamment dans le cas où le moule est réalisé en fonte lamellaire. En effet, comme on le verra plus loin dans la description, au cours du procédé on chauffe localement le moule au niveau autour de l'arête à recharger: un préchauffage du moule aurait donc tendance à trop faire augmenter localement la température du moule par rapport au temps nécessaire pour son refroidissement, entraînant ainsi un risque important de rupture locale du moule.

On notera que l'expression « à froid » dans cette acception n'est pas limitée aux moules utilisés à température ambiante, mais elle s'étend aux moules pouvant avoir subi des traitements augmentant leur température, qui doivent être distingués du préchauffage spécifique conforme à l'art antérieur (à des températures de l'ordre de 350°C-450°C) préalable au rechargement.

Le matériau de rechargement 11 est constitué d'au moins un métal ou alliage métallique. Il peut par exemple être constitué d'alliage à base de nickel, de carbure de nickel, et/ou encore comporter du cobalt. En outre, il peut avantageusement se présenter sous forme de poudre, ce qui permet de le faire fondre plus rapidement.

La fusion du matériau de rechargement 11 est effectuée au moyen d'un laser 2 de puissance, pouvant être, à titre d'exemple non limitatif, un laser à Argon. Le laser émet un faisceau 21 qui présente une zone de focalisation 211, comme illustrée en figure 2. Cette zone de focalisation, conformément à l'invention, se situe à une distance donnée du point de sortie du faisceau 21, fonction du type de laser, et pouvant être ajustée notamment en jouant sur la position relative des miroirs qui le constituent. Typiquement, la zone de focalisation peut être située à une distance de l'ordre de 15 mm de la sortie du laser. La zone de focalisation 211 présente également des dimensions qui dépendent du type de laser utilisé. Typiquement, pour un faisceau du laser de 3,5 mm, cette zone peut s'étendre sur une longueur de 3 à 4 mm.

Le faisceau 21 du laser 2 impacte la surface 10 du moule 1 pour la faire fondre superficiellement, et réaliser le soudage entre la pièce et le matériau de rechargement, de sorte que le moule est chauffé très localement. La température du faisceau 21 du laser 2 atteint une valeur de l'ordre de 1100°C à 1200°C, permettant en même temps la dilution du matériau de rechargement et une fusion en surface de la fonte, du bronze ou de l'acier constituant le moule à recharger.

Selon un mode de réalisation de l'invention, illustré en figure 1a, les étapes de dépôt et de fusion du matériau de rechargement sont réalisées simultanément. Pour ce faire, le laser est pointé sur le moule 1 à recharger, et le matériau de rechargement 11 est projeté sous forme de poudre sur le moule 1 et dans le faisceau du laser au moyen d'une buse 3. Comme illustré en figure 1a, la buse 3 peut être coaxiale au faisceau du laser, et, le cas échéant, solidaire de celui-ci. Alternativement, elle peut être distincte du laser, et le cas échéant non coaxiale au faisceau.

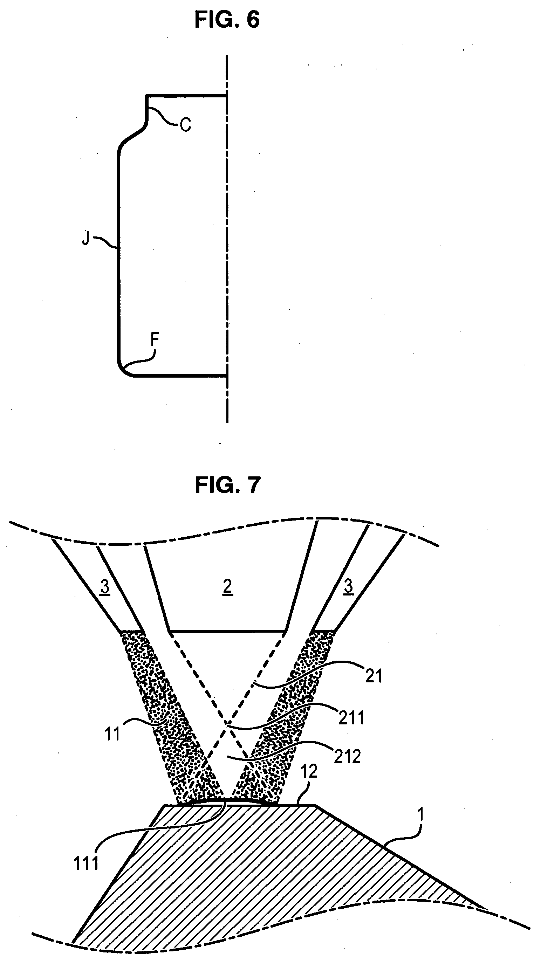

Le moule à recharger se situe alors, conformément à l'invention, en aval de la zone de focalisation 211 du faisceau du laser, c'est-à-dire au niveau de la partie divergente du faisceau du laser 2, comme illustré sur la figure 7. Le laser 2 est positionné, conformément à l'invention, de sorte que le point de focalisation se trouve à une distance comprise entre 2mm et 15mm de la surface du moule, typiquement une dizaine de millimètres. Le matériau de rechargement 11 quant à lui peut typiquement être projeté sur la surface du moule 1, dans le faisceau 21 du laser 2, en aval de sa zone de focalisation 211. Pour cela, en particulier dans le cas d'un laser muni d'une buse coaxiale pour projeter le matériau de rechargement, le positionnement de la zone de focalisation 211 peut par exemple être ajusté au moyen des miroirs de manière à la rapprocher de la sortie du laser 2. En effet, l'angle de projection de la buse 3 ne peut en généralement pas être modifié.

De la sorte, la température étant plus faible au niveau du divergeant 212 du laser 2 qu'au niveau de la zone focalisation 211, la température locale de la surface du moule est plus faible que si le moule était placé dans la zone de focalisation 211. Par ailleurs, le faisceau laser présentant une section plus importante au niveau du divergent 212 que dans la zone de focalisation, il est possible de faire fusionner davantage de matériau de rechargement 11, de sorte qu'on obtient un cordon plus large que lorsque la surface du moule est placée dans la zone de focalisation.

Selon un mode de réalisation conforme à l'invention du procédé, illustré en figure 1b, les étapes de dépose et de fonte du matériau de rechargement sont réalisées successivement. Le matériau de rechargement est alors déposé sur le moule à recharger par une buse 3 de projection ou tout autre moyen connu séparé du laser avant d'être fondu par exposition au faisceau 21 du laser 2.

En fonction du diamètre de la buse et de la distance entre la zone de focalisation 211 du laser, la surface de matériau déposée peut présenter par exemple une dimension de l'ordre de 5/10^{ème} de mm à 15 mm, et de préférence de l'ordre de 1 à 7 mm. Un exemple de dépôt de matériau est illustré en figure 3.

Afin de procéder au rechargement complet du moule, on déplace le laser relativement à celui-ci selon un mouvement de balayage de manière à former un ou plusieurs cordons de matériau parallèles et parcourir l'intégralité de la surface à recharger. Dans le cas où la poudre de matériau de rechargement 11 est projetée par une buse coaxiale 3, la buse 3 est de préférence solidaire du laser 2 afin de pouvoir effectuer les mêmes déplacements.

Le déplacement du laser se fait avantageusement à vitesse constante, afin que la quantité de matériau de rechargement soit homogène sur toute la surface du moule à recharger.

A débit constant de dépôt de matériau, les dimensions du cordon déposé varient en fonction de la vitesse du laser et de la distance entre la surface plane 11 formée sur l'arête du moule 1 et la zone de focalisation 211 du laser. On comprendra bien entendu que les dimensions du cordon peuvent également être modifiées en ajustant le débit de matériau projeté.

Par exemple, pour un rechargement avec un laser à Argon ayant une puissance de l'ordre de 3000 W et un diamètre de focale de 3 mm, un matériau de rechargement 11 sous forme de poudre, projeté à un débit de l'ordre de 20 g/min, une vitesse de déplacement du laser 2 de l'ordre de 800 mm/min et une distance entre la surface plane 12 et la zone de focalisation 211 de l'ordre de 10 mm, on peut obtenir un cordon de matériau de rechargement faisant environ 1.5 mm d'épaisseur pour 5 à 7 mm de large.

Avantageusement, en éloignant le moule 1 de la zone de focalisation 211 du laser 2 et en réduisant la vitesse de déplacement du laser 2, il est alors possible de recharger des moules 1 en n'effectuant qu'un seul passage, voire éventuellement deux selon les dimensions de la surface 12 à recharger.

En effet, comme nous l'avons vu plus haut, les dimensions du cordon sont plus importantes lorsque celui-ci est placé en aval de la zone de focalisation, au niveau du divergeant 212 du faisceau laser, que lorsque le moule 1 est disposé au niveau de la zone de focalisation 211.

Par ailleurs, il devient en outre possible de recharger des moules en fonte lamellaire, sans risquer que le moule ne se fissure ou ne soit endommagé. En effet, l'élévation locale de la température du moule par le laser 2 est plus faible au niveau du divergeant 212 que dans la zone de focalisation 21, de sorte qu'il est possible de diminuer la vitesse de passage du laser sans trop augmenter la température locale de la surface plane 11. En conséquence, le gradient de température dû au passage du laser n'est pas trop important en comparaison avec le gradient de température de la surface lors de son refroidissement, et le moule ne risque donc pas de se fissurer, même lorsque celui-ci est en fonte lamellaire.

Le procédé selon l'invention permet donc de traiter des moules aussi bien en fonte lamellaire que sphéroïdale.

En fonction des résultats désirés en termes de géométrie du moule, mais également si l'on souhaite le consolider, plusieurs couches de matériau peuvent être empilées par passages successifs du laser au même endroit.

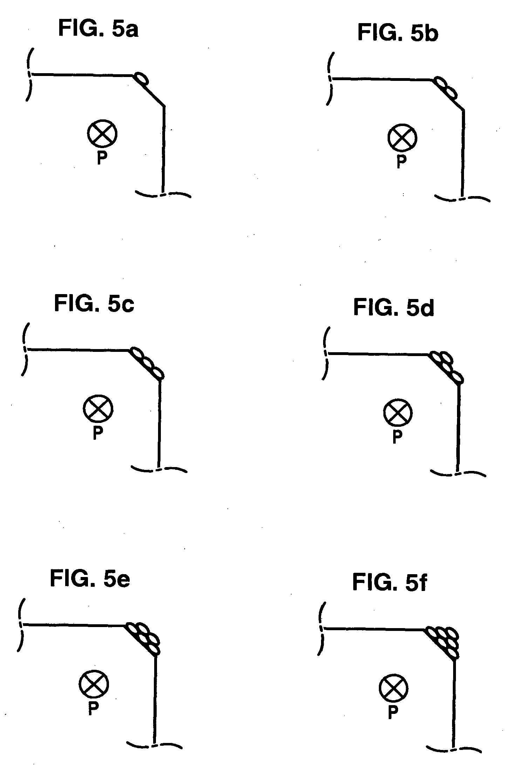

En outre, le laser est déplacé dans un plan parallèle à la surface du moule, selon une trajectoire déterminée dépendant de la surface à recharger. Par exemple, pour le cas d'une surface plane 11 présentant une direction principale P, le laser peut effectuer plusieurs passages en translation le long de cette direction principale P, avec un décalage entre chaque passage, de sorte qu'une partie du matériau déposé à un passage recouvre le matériau déposé au passage précédent, comme visible sur les figures 3 et 5. Le décalage peut être alors être de l'ordre de 2 mm, pour une épaisseur de matériau déposé de l'ordre de 1 à 1,5 mm. A titre d'exemple, on peut obtenir un cordon ayant une épaisseur de l'ordre de 1,5 mm en un passage, et 2,5 mm en deux passages.

Le procédé selon l'invention peut comprendre une étape supplémentaire de refroidissement du moule rechargé. Il peut s'agir d'un refroidissement par paliers. Avantageusement, si le rechargement a été réalisé à froid, cette étape ne nécessite que peu de temps (de l'ordre de quelques minutes en fonction de la masse de la pièce et de l'importance du rechargement).

En refroidissant, le matériau de rechargement 11 constitue alors une couche de renforcement et de protection 111 de l'arête du moule 1 plus résistante aux cycles de moulage que le reste du moule 1.

Enfin, une dernière étape du procédé consiste à usiner la couche de de renforcement et de protection 111, pour enlever le surplus de matériau et ajuster la forme de la partie rechargée du moule en fonction de la géométrie désirée, et/ou pour obtenir un état de surface désiré.

### Exemple d'application du procédé :

En référence aux figures 4 et 5, un exemple d'application du procédé selon l'invention est représenté. Les figures représentent un chanfrein 12 réalisé sur le bord d'une partie concave d'un moule (représenté en figure 4a), en lieu et place d'une arrête qui délimite normalement cette partie concave, par exemple un col C, comme représenté en figure 4b.

En référence à la figure 4c, est représenté schématiquement un exemple de chanfrein rechargé conformément à une forme de réalisation du procédé selon l'invention.

Dans cet exemple, le chanfrein 12 présente une largeur de 3 mm, une hauteur de 3 mm et une extension longitudinale donnée selon la direction principale P.

Afin de recharger un tel chanfrein 12, on effectue un unique passage du laser 2 le long de la direction principale P, en plaçant le chanfrein 12 à une distance d'environ 10 mm de la zone de focalisation 211, en déplaçant le laser 2 à une vitesse de l'ordre de 800 mm/min, et en envoyant de la poudre métallique 11 selon un débit de l'ordre de 20 g/min. On réalise alors un cordon de matériau de rechargement sur le chanfrein 12, présentant des dimensions de l'ordre de 3 mm d'épaisseur pour 3 mm de large.

En variante, comme illustré sur les figures 5a à 5f, il est également possible d'effectuer plusieurs passages du laser 2 le long de la direction principale P, selon un ordre déterminé, ici six passages successifs, en ajustant le débit de poudre sur une valeur comprise entre 10 g/min et 40 g/min par exemple, la distance entre le chanfrein 12 et la zone de focalisation 211 et/ou la vitesse de passage du laser 2.

Ensuite, le cordon de rechargement 11 est usiné pour obtenir une arrête nette en bord de la concavité, conforme à la géométrie initiale du moule 1.

Le procédé de l'invention présente de nombreux avantages par rapport aux techniques de l'art antérieur.

Tout d'abord, le temps nécessaire au rechargement d'un moule est réduit, puisque l'importante température du laser permet d'effectuer le soudage plus rapidement. Typiquement, le laser peut effectuer le rechargement à une vitesse allant de 800 mm/min à 2000 mm/min quand le dépôt de matériau de rechargement est réalisé avec un débit de l'ordre de 40 g/min, comme dans notre exemple précédent. Du fait de cette vitesse, la dimension de la ZAT est également diminuée par rapport aux techniques de rechargement connues de l'art antérieur.

En outre, la rapidité du soudage, la faible vitesse du laser 2 et la distance entre le moule 1 et la zone de focalisation 211 permettent au procédé d'être applicable à des fontes sphéroïdales comme à des fontes lamellaires, ou d'être appliqué de la même manière à tout type de fonte indépendamment de leur pourcentage de carbone.

Enfin, l'importante densité d'énergie du laser (température très importante appliquée sur une surface très localisée) permet un rechargement de grande précision, ce qui implique une économie dans la quantité de matériau de rechargement déposée sur le moule.

Ces avantages ont pu être quantifiés au moyen de tests comparatifs entre le rechargement PTA, qui est le procédé de rechargement de moules de verrerie de l'art antérieur présentant les meilleurs résultats, et le rechargement par laser selon l'invention.

Les résultats présentés concernent des tests réalisés sur des barreaux de fonte (la fonte étant identique à une fonte utilisée pour des moules), de dimensions 40*40*200 mm. Sur ces pièces ont été usinés deux chanfreins.

Au cours des tests ont été mesurés les dimensions de la ZAT, le temps nécessaire au rechargement de la pièce et l'épaisseur de matériau déposée pour combler 4 mm de chanfrein. Les résultats sont exposés dans le tableau suivant.

| | Rechargement PTA | Rechargement laser |
|---|---|---|
| Dimension ZAT | 2 mm | 0,2 mm |
| Durée du rechargement | 3 min | 40 s |
| Epaisseur de dépôt de rechargement | 10 mm | 7 mm |

Comme on le voit, selon ces trois critères, le procédé de rechargement par laser est plus efficace que le procédé PTA. Il donne des résultats d'une meilleure qualité métallurgique, permet de réaliser une économie substantielle de temps et d'argent car il est plus rapide et consomme moins de matériau de rechargement que les procédés traditionnels.

Par conséquent, l'invention permet de recharger un moule de verrerie en fonte, aux contraintes thermiques et mécaniques qu'il est destiné à subir, de manière simple, rapide et économique, en n'appliquant un matériau de rechargement que localement, dans les zones à risque du moule (à savoir au niveau de ses arêtes, c'est-à-dire au niveau du col C, du plan de joint J et du fond F du moule 1), et adapte pour cela la technique de rechargement au laser, au cours de laquelle on fait fondre une poudre métallique sur l'arête préalablement usinée au moyen d'un laser de puissance.

## Revendications

1. Procédé de rechargement d'un moule de verrerie (1) en fonte, en bronze, ou en acier, au cours duquel on soude un matériau de rechargement, comprenant l'etape suivante:
- usiner une arête (C, F, J) du moule (1) de manière à former surface plane (12), par exemple un méplat ou un chanfrein, le procédé étant **caractérisé en ce qu'**il comprend les étapes consistant à:
- déposer une quantité de matériau de rechargement (11) déterminée sur la surface plane (12) de l'arête (C, F, J) ainsi usinée, le matériau de rechargement (11) comprenant un métal ou un alliage métallique, et, simultanément,
- souder localement le matériau de rechargement (11) sur la surface plane (12) au moyen d'un faisceau (21) d'un laser (2), de manière à former une zone de renforcement (111)
dans lequel la surface plane (12) du moule à recharger (1) est disposée en aval à une distance comprise entre 2 mm et 15 mm d'une zone de focalisation (211) du faisceau (21) du laser (2).

2. Procédé selon la revendication 1, dans lequel les étapes de dépôt et de soudage du matériau de rechargement sont mises en oeuvre sans préchauffage du moule (1).

3. Procédé selon l'une des revendications 1 ou 2, dans lequel le matériau de rechargement (11) se présente sous forme de poudre.

4. Procédé selon la revendication 3, dans lequel le matériau de rechargement (11) est projeté au moyen d'une buse (3) sur le moule.

5. Procédé selon la revendication 1, dans lequel le matériau de rechargement (11) est projeté sur la surface plane (12), en aval de la zone de focalisation (211) du faisceau (21) du laser (2).

6. Procédé selon l'une des revendications 1 ou 5, dans lequel la zone de focalisation (211) est disposée à une dizaine de millimètres de la surface plane (12).

7. Procédé de rechargement selon l'une des revendications 1 à 6, au cours duquel on effectue un ou deux passages du faisceau (21) du laser (2) sur la surface plane (12) du moule (1) à recharger selon une vitesse de balayage contrôlée.

8. Procédé selon la revendication 7, dans lequel la vitesse de balayage est comprise entre 600 mm/min et 2000 mm/min.

9. Procédé de rechargement selon l'une des revendications 1 à 8, comprenant une étape ultérieure d'usinage de la zone de renforcement (111).

## Patentansprüche

1. Verfahren zum Auftragschweißen einer Glashüttenform (1) aus Gusseisen, Bronze oder aus Stahl, in dessen Verlauf man einen Auftragswerkstoff schweißt, das den folgenden Schritt umfasst:
- Bearbeiten einer Kante (C, F, J) der Form (1) derart, dass eine flache Oberfläche (12), zum Beispiel eine Flachstelle oder eine Abfasung gebildet wird, Verfahren **dadurch gekennzeichnet, dass** es die Schritte umfasst, die aus Folgendem bestehen:
- Aufbringen einer bestimmten Auftragschweißwerkstoffmenge (11) auf der flachen Oberfläche (12) der Kante (C, F, J), die derart bearbeitet ist, wobei der Auftragswerkstoff (11) ein Metall oder eine metallische Legierung umfasst, und gleichzeitig
- lokales Schweißen des Auftragschweißwerkstoffs (11) auf der flachen Oberfläche (12) mittels eines Strahls (21) eines Lasers (2) derart, dass eine Verstärkungszone (111) gebildet wird,
wobei die flache Oberfläche (12) der zu auftragschweißenden Form (1) stromabwärts in einer Entfernung zwischen 2 mm und 15 mm von einer Fokussierungszone (211) des Strahls (21) des Lasers (2) angeordnet ist.

2. Verfahren nach Anspruch 1, wobei die Schritte des Aufbringens und des Schweißens des Auftragschweißwerkstoffs ohne Vorwärmen der Form (1) erfolgen.

3. Verfahren nach einem der Ansprüche 1 oder 2, wobei der Auftragschweißwerkstoff (11) die Form eines Pulvers hat.

4. Verfahren nach Anspruch 3, wobei der Auftragschweißwerkstoff (11) mittels einer Düse (3) auf die Form geschleudert wird.

5. Verfahren nach Anspruch 1, wobei der Auftragschweißwerkstoff (11) auf die flache Oberfläche (12) stromabwärts der Fokussierungszone (211) des Strahls (21) des Lasers (2) geschleudert wird.

6. Verfahren nach einem der Ansprüche 1 oder 5, wobei die Fokussierungszone (211) in etwa zehn Millimeter von der flachen Oberfläche (12) abgelagert wird.

7. Auftragschweißverfahren nach einem der Ansprüche 1 bis 6, in dessen Verlauf man einen oder zwei Durchgänge des Strahls (21) des Lasers (2) auf der flachen Oberfläche (12) der Form (1), die zu auftragschweißen ist, gemäß einer gesteuerten Durchlaufgeschwindigkeit durchführt.

8. Verfahren nach Anspruch 7, wobei die Abtastgeschwindigkeit zwischen 600 mm/Min. und 2000 mm/Min. liegt.

9. Auftragschweißverfahren nach einem der Ansprüche 1 bis 8, das einen späteren Bearbeitungsschritt der Verstärkungszone (111) umfasst.

## Claims

1. Method for cladding a glassware mould (1) made of cast iron, bronze or steel, during which a cladding material is welded, comprising the following step:
- machining an edge (C, F, J) of the mould (1) so as to form a planar surface (12), for example a flat or a chamfer, the method being **characterised in that** it comprises the steps consisting in:
- depositing a determined quantity of cladding material (11) on the planar surface (12) of the machined edge (C, F, J), the cladding material (11) comprising a metal or a metal alloy, and, simultaneously,
- locally welding the cladding material (11) on the surface plane (12) using a beam (21) of a laser (2), in such a way as to form a reinforcing zone (111)
wherein the planar surface (12) of the mould to be cladded (1) is arranged downstream at a distance between 2 mm and 15 mm from a focusing zone (211) of the beam (21) of the laser (2).

2. Method according to claim 1, wherein the steps of depositing and of welding the cladding material are implemented without preheating the mould (1).

3. Method according to one of claims 1 or 2, wherein the cladding material (11) is in the form of a powder.

4. Method according to claim 3, wherein the cladding material (11) is sprayed using a nozzle (3) on the mould.

5. Method according to claim 1, wherein the cladding material (11) is sprayed on the planar surface (12), downstream of the focusing zone (211) of the beam (21) of the laser (2).

6. Method according to one of claims 1 or 5, wherein the focusing zone (211) is disposed at about ten millimetres from the planar surface (12).

7. Method for cladding according to one of claims 1 to 6, during which one or two passages of the beam (21) of the laser (2) are carried out on the planar surface (12) of the mould (1) to be cladded according to a controlled slew rate.

8. Method according to claim 7, wherein the slew rate is between 600 mm/min and 2000 mm/min.

9. Method for cladding according to one of claims 1 to 8, comprising a later step of machining of the reinforcing zone (111).
